(19) Europäisches Patentamt
European Patent Office
Office européen des brevets

(11) **EP 4 489 032 A1**

(12) **EUROPEAN PATENT APPLICATION**
published in accordance with Art. 153(4) EPC

(43) Date of publication:
**08.01.2025 Bulletin 2025/02**

(21) Application number: **23759673.9**

(22) Date of filing: **07.02.2023**

(51) International Patent Classification (IPC):
**H01B 1/08** $^{(2006.01)}$  **H01B 1/06** $^{(2006.01)}$
**H01M 10/052** $^{(2010.01)}$  **H01M 10/0562** $^{(2010.01)}$

(52) Cooperative Patent Classification (CPC):
**H01B 1/06; H01B 1/08; H01M 10/052;**
**H01M 10/0562; Y02E 60/10**

(86) International application number:
**PCT/JP2023/003939**

(87) International publication number:
**WO 2023/162669 (31.08.2023 Gazette 2023/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.02.2022 JP 2022028893**

(71) Applicant: Resonac Corporation
**Tokyo 105-7325 (JP)**

(72) Inventors:
• **SUMITANI, Akihumi**
  **Tokyo 105-8518 (JP)**
• **KURAHASHI, Shunsuke**
  **Tokyo 105-8518 (JP)**
• **LEE, Kunchan**
  **Tokyo 105-8518 (JP)**
• **SEI, Ryosuke**
  **Tokyo 105-8518 (JP)**

(74) Representative: **Strehl Schübel-Hopf & Partner**
**Maximilianstrasse 54**
**80538 München (DE)**

(54) **LITHIUM ION CONDUCTIVE SOLID ELECTROLYTE**

(57)    The present invention provides an oxide-based lithium ion conductive solid electrolyte having a high ion conductivity and a lithium-ion secondary battery using the solid electrolyte.

The present invention includes a lithium ion conductive solid electrolyte that is a compound represented by a compositional formula $Li_{2-x}Ti_{1-x}M1_xO_3$, wherein the M1 is at least one metallic element selected from the group consisting of elements of niobium and tantalum, and $0.05 \leq x \leq 0.15$.

[Fig. 1]

EP 4 489 032 A1

## Description

Technical Field

The present invention relates to a lithium ion conductive solid electrolyte.

Background Art

In recent years, the development of high output and high capacity batteries is required for the power sources for laptop computers, tablet devices, mobile phones, smartphones, and electric vehicles (EV). Of these, all-solid-state lithium-ion batteries using a solid electrolyte in place of a liquid electrolyte such as an organic solvent have been drawing attentions for the excellent charging/discharging efficiency, charging speed, safety, and productivity.

In the field of such all-solid-state lithium-ion batteries, techniques for improving a positive electrode material using a lithium ion conductor material have been disclosed.

For example, Patent Literature 1 discloses a positive electrode in which a coating film containing a lithium ion conductor is disposed on the positive electrode surface, whereby, in the interface between a positive electrode active material and a sulfide-based solid electrolyte, the diffusion of components of Co, P, and S is suppressed, and the generation of a lithium deficient layer is prevented, thereby reducing the interfacial resistance. In addition, Patent Literature 2 discloses a positive electrode active material in which a reaction-suppressing portion containing a first lithium ion conductor having favorable Li ion conductivity, such as $LiNbO_3$, and a second lithium ion conductor having high electrochemical stability is provided on the surface of the positive electrode active material, whereby it is possible to suppress a temporal increase in the interfacial resistance between the positive electrode active material and a sulfide solid electrolyte material.

Citation List

Patent Literature

     Patent Literature 1: JP2021-150286A
     Patent Literature 2: JP2013-026003A

Summary of Invention

Technical Problem

As lithium ion conductive solid electrolytes that conduct lithium ions, oxide-based solid electrolytes are more preferable than sulfide-based solid electrolytes from a viewpoint of safety.

However, in Patent Literature 1, lithium zirconium oxide, lithium titanium oxide, and lithium niobium oxide are exemplified as the lithium ion conductor, but no specific compound compositions other than $Li_2O\text{-}ZrO_2$ are disclosed. In addition, in Patent Literature 2, Li-containing oxides such as niobium oxides such as $LiNbO_3$ and tantalum oxide such as $LiTaO_3$ are exemplified as the first lithium conductor, and Li-containing compounds having a polyanion structural part containing at least one of B, Si, P, Al, or W and containing $Li_2Ti_2O_5$, $Li_2Ti_2O_3$, or $Li_4Ti_5O_{12}$ are exemplified as the second lithium conductor.

However, in these publications, there is neither description nor suggestion of improvement in the ion conductivity of oxide-based solid electrolytes as lithium ion conductors. In view of the present situation described above, an object of the present invention is to provide an oxide-based lithium ion conductive solid electrolyte having a high ion conductivity and a lithium-ion secondary battery using the solid electrolyte.

Solution to Problem

The present invention includes constitutions to be described later.

[1] A lithium ion conductive solid electrolyte that is a compound represented by a compositional formula $Li_{2-x}Ti_{1-x}M1_xO_3$,
wherein the M1 is at least one metallic element selected from the group consisting of elements of niobium and tantalum, and

$$0.05 \leq x \leq 0.15.$$

[2] The lithium ion conductive solid electrolyte according to [1], wherein a monoclinic crystal structure is confirmed in X-ray diffraction measurement.

[3] The lithium ion conductive solid electrolyte according to [1] or [2], wherein a total lithium ion conductivity $\delta_{total}$ (25°C) is $1.0 \times 10^{-6}$ (S/cm) or more.

[4] A lithium-ion secondary battery, comprising the lithium ion conductive solid electrolyte according to any one of [1] to [3] as a solid electrolyte.

Advantageous Effects of Invention

The present invention makes it possible to provide an oxide-based lithium ion conductive solid electrolyte having a high ion conductivity and a lithium-ion secondary battery using the solid electrolyte.

In addition, the use of the lithium ion conductive solid electrolyte makes it possible to obtain, for example, a high output and high capacity lithium-ion secondary battery.

Brief Description of Drawing

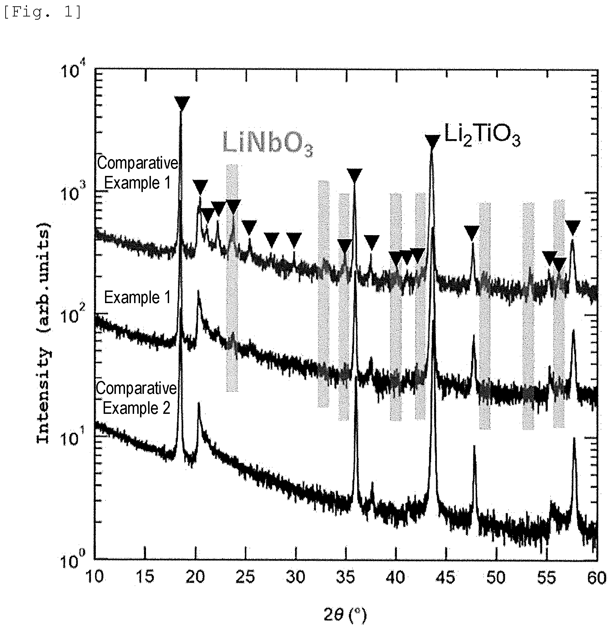

[Figure 1] Figure 1 is the X-ray diffraction patterns of lithium ion conductive solid electrolytes (1) to (3) prepared in Example 1 and Comparative Examples 1 and 2.

Description of Embodiments

A lithium ion conductive solid electrolyte according to one embodiment of the present invention (hereinafter, also referred to as the present electrolyte) is a compound represented by a compositional formula $Li_{2-x}Ti_{1-x}M1_xO_3$, wherein the M1 is at least one metallic element selected from the group consisting of elements of niobium and tantalum, and $0.05 \leq x \leq 0.15$.

More specifically, the present electrolyte is an electrolyte obtained by substituting some of titanium elements with doped M1 elements in a lithium-containing titanium oxide represented by a compositional formula $Li_2TiO_3$. Here, when the M1 element substitutes a tetravalent titanium ion as a pentavalent ion, it is considered that a lithium element-free lithium vacancy is introduced into the crystal structure of the compound from a viewpoint of charge compensation as the composition of lithium is represented by 2-x and it becomes easy for a lithium ion to migrate, whereby the lithium ion conductivity improves.

(Constituent elements of lithium ion conductive solid electrolyte)

The present electrolyte has at least lithium, titanium, the M1, and oxygen as constituent elements, and the M1 is at least one metallic element selected from the group consisting of elements of niobium and tantalum. The present electrolyte can also be said to be a lithium ion conductive solid electrolyte composed of a specific oxide containing lithium. Here, this does not strictly exclude the presence of an impurity in the lithium ion conductive solid electrolyte. It is permissible for the lithium ion conductive solid electrolyte to contain an inevitable impurity attributed to a raw material and/or the production process and an impurity having a different crystal system to an extent that the lithium ion conductivity is not degraded.

The ratio of the number of the atoms of each constituent element of lithium, titanium, the M1, and oxygen that constitute the lithium ion conductive solid electrolyte in a preferable embodiment of the present invention can be measured using, for example, absolute intensity quantification by Auger electron spectroscopy (AES) using, a standard powder sample containing Mn, Co, and Ni in fractions of 1:1:1. Examples of the standard powder sample include lithium-containing transition metal oxides such as $LiCoO_2$.

(M1 content)

The compositional formula of the present electrolyte is represented by the following formula (1).

$$Li_{2-x}Ti_{1-x}M1_xO_3 \text{ ...} \qquad \text{Formula (1)}$$

In the formula (1), the content of the M1 in the present electrolyte, which is represented by x, is 0.05 or more and 0.15 or less. This content range is 5% or more and 15% or less in terms of the percentage of the number of the atoms of the M1 relative to the total number of the atoms of titanium and the M1. The lower limit of the M1 content is preferably 0.06, more preferably 0.07, and particularly preferably 0.08 when represented by x in the formula (1). The upper limit of the M1 content is preferably 0.13, more preferably 0.12, and further preferably 0.10 when represented by x in the formula (1). When the M1 content is within the range described above, the improvement in lithium ion conductivity is large. The M1 content can be obtained by a conventionally known quantification analysis in terms of the percentage of the number of the atoms of the M1 relative to the total number of atoms of titanium and the M1. For example, the M1 content can be obtained by adding an acid to a sample, pyrolyzing the sample, fixing the volume of the pyrolysate, and then using a high frequency inductively coupled plasma (ICP) emission spectrometer. In a method for producing a lithium ion conductive solid electrolyte described later, since titanium and the M1 do not flow out of the system, the percentage of the number of the atoms of the M1 relative to the total number of the atoms of titanium and the M1, which represents the amount of the M1 doped, can be simply calculated from the amounts of raw materials prepared.

(Metallic element M1)

The M1 in the present electrolyte is at least one metallic element selected from the group consisting of elements of niobium and tantalum.

When focusing on the valencies of the constituent elements of the lithium ion conductive solid electrolyte, the M1 is doped as a pentavalent ion and is thus different from titanium by 1 in terms of the valency. Therefore, the number of lithium ions that are contained in the lithium ion conductive solid electrolyte decreases by the number x of the doped M1 atoms in order to maintain the charge neutrality balance of the entire electrolyte.

(Crystal structure)

Preferably, the present electrolyte is confirmed to have a monoclinic crystal structure in X-ray diffraction measurement. When the M1 is doped to substitute the titanium element and occupy the position of the titanium element and is in a state of being solid-soluted in the lithium-containing titanium oxide, the monoclinic crystal structure of $Li_2TiO_3$, which becomes the basis, is confirmed. In the X-ray diffraction measurement, it is preferable that only the monoclinic crystal structure of $Li_2TiO_3$ is confirmed, and it is not preferable that a crystal structure that can be identified as $LiM1O_3$ containing the doped M1 and having no ion conductivity or having a low ion conductivity is additionally confirmed.

In addition, in the present electrolyte, since the M1 is doped to substitute the titanium element, particularly the angle $\beta$ of the lattice constant alters depending on the amount of the M1 doped, but the monoclinic crystal structure is maintained. However, the monoclinic crystal structure can even become orthorhombic when the angle $\beta$ varies due to the doping amount and approaches nearly 90°.

(Lithium ion conductivity)

The total lithium ion conductivity $\delta_{total}$ at 25°C of the present electrolyte is preferably $1.0 \times 10^{-6}$ (S/cm) or more, more preferably $1.5 \times 10^{-6}$ (S/cm) or more and further preferably $2.0 \times 10^{-6}$ (S/cm) or more. The total lithium ion conductivity can be measured by a method described in Examples to be described later.

(Method for producing lithium ion conductive solid electrolyte)

A method for producing the present electrolyte is not particularly limited as long as a lithium ion conductive solid electrolyte within the constituent range described above can be obtained. A solid-phase reaction, a liquid-phase reaction, or the like can be adopted. Hereinafter, the production method using the solid-phase reaction will be described in detail.

An example of the production method by the solid-phase reaction is a production method having at least one phase of a mixing step and one phase of a firing step.

In the mixing step, a compound containing lithium atom(s), a compound containing titanium atom(s) and a compound containing the M1 atom(s) are mixed.

The compound containing lithium atom(s) is not particularly limited, inorganic compounds are preferable due to easy handleability, and examples of the inorganic compound containing lithium atom(s) include lithium compounds such as lithium carbonate ($Li_2CO_3$) and lithium oxide ($Li_2O$). These lithium compounds may be used singly, or in combinations of two or more thereof. Lithium carbonate ($Li_2CO_3$) is preferably used due to easy decomposition and reaction.

The compound containing titanium atom(s) is not particularly limited, examples thereof include titanium compounds such as titanium dioxide ($TiO_2$) and titanium tetraethoxide, and inorganic compounds are preferable due to easy handleability. These titanium compounds may be used singly, or in combinations of two or more thereof. Titanium dioxide ($TiO_2$) is preferably used from a viewpoint of costs and easy handleability.

The compound containing the M1 atom(s) is not particularly limited, inorganic compounds are preferable due to easy handleability, and examples thereof include compounds such as oxides and nitrates of the M1. These compounds may be used singly, or in combinations of two or more thereof. Oxides are preferably used from a viewpoint of costs.

In a case where the M1 is niobium, examples of the oxide thereof include niobium pentoxide ($Nb_2O_5$).

In a case where the M1 is tantalum, examples of the oxide thereof include tantalum compounds such as tantalum pentoxide ($Ta_2O_5$) and tantalum nitrate ($Ta(NO_3)_5$). These tantalum compounds may be used singly, or in combinations of two or more thereof. Tantalum pentoxide ($Ta_2O_5$) is preferably used from a viewpoint of costs.

The raw materials described above can be mixed using a roll tumbling mill, a ball mill, a small-diameter ball mill (bead mill), a medium stirring mill, an air flow pulverizer, a mortar, an automatic kneading mortar, a tank crusher, or a jet mill. The ratio of the raw materials to be mixed is, simply speaking, a stoichiometric ratio at which the composition of the formula (1) described above is achieved. More specifically, lithium atoms are likely to flow out of the system in the firing step described later, and thus the ratio may be adjusted by excessively adding the compound containing lithium atom(s) described above by about 10% to 20%.

The mixing step may be carried out under the atmosphere. A gas atmosphere of a nitrogen gas and/or an argon gas with an adjusted oxygen gas content is more preferable.

In the firing step, a mixture obtained in the mixing step is fired. When the firing step is carried out several times, for example, a 2-phase step of low-temperature firing and high-temperature firing, a pulverizing step using a ball mill or a mortar may be provided between the firing steps for the purpose of the pulverization or diameter reduction of a primary fired product.

The firing step may be carried out under the atmosphere. A gas atmosphere of a nitrogen gas and/or an argon gas with an adjusted oxygen gas content is more preferable.

The firing temperature is preferably in a range from 800°C to 1200°C, more preferably in a range from 850°C to 1100°C, and further preferably in a range from 900°C to 1000°C. When the firing is carried out at 800°C or more, the metallic element M1 is sufficiently solid-soluted and the ion conductivity is enhanced, whereas when the firing is carried out at 1200°C or less, lithium atoms are less likely to flow out of the system, which is preferable. The firing time is preferably 1 to 16 hours, and more preferably 3 to 12 hours. When the firing time is in the range described above, the total lithium ion conductivity is likely to increase, which is preferable. When the firing time is longer than the range described above, lithium atoms are likely to flow out of the system. The firing time and the firing temperature are adjusted in coordination with each other.

When the firing step is, for example, a 2-phase step of low-temperature firing and high-temperature firing, the low-temperature firing may be carried out at 400°C to 800°C for 2 to 12 hours.

High-temperature firing may be carried out twice for preventing by-products from remaining. In the second firing step, the firing temperature is preferably in a range from 800°C to 1200°C, more preferably in a range from 850°C to 1100°C, and further preferably in a range from 900°C to 1000°C. The firing time at each firing step is preferably 1 to 8 hours, and more preferably 2 to 6 hours.

The fired product obtained after the firing, when left in the atmosphere, may alter in quality by, for example, absorbing moisture or reacting to carbon dioxide. The fired product obtained after the firing is preferably moved to and stored under a dehumidified inert gas atmosphere when the fired product reaches lower than 200°C while decreasing the temperature after the firing.

The present electrolyte can be thus obtained. Examples of one of the preferable embodiments of the present electrolyte include the utilization for a lithium-ion secondary battery as a solid electrolyte.

(Lithium-ion secondary battery)

One embodiment of the present invention is a lithium-ion secondary battery containing the present electrolyte as a solid electrolyte. The structure of the lithium-ion secondary battery is not particularly limited and, for example, in the case of a solid battery with a solid electrolyte layer, the battery has a structure in which a positive electrode collector, a positive electrode layer, a solid electrolyte layer, a negative electrode layer, and a negative electrode collector are laminated in this order.

The positive electrode collector and the negative electrode collector are not particularly limited as long as a material thereof conducts electrons without causing an electrochemical reaction. For example, these are composed of a conductor such as a pure metal such as copper, aluminum, or iron or an alloy thereof or a conductive metal oxide such as an antimony-doped tin oxide (ATO) or a tin-doped indium oxide (ITO). Also usable is a collector in which a conductive adhesive layer is provided on the surface of a conductor. The conductive adhesive layer can be composed of, for example, a particulate conductive material or a fibrous conductive material.

The positive electrode layer and the negative electrode layer can be obtained by a known powder molding method. For example, a positive electrode collector, a powder for a positive electrode layer, a powder for a solid electrolyte layer, a powder for a negative electrode layer, and a negative electrode collector are superimposed in this order and powder-molded simultaneously, whereby the layer formation of each of the positive electrode layer, the solid electrolyte layer, and the negative electrode layer and the connection between the positive electrode collector, the positive electrode layer, the solid electrolyte layer, the negative electrode layer, and the negative electrode collector can also be simultaneously carried out. Alternatively, each layer can also be powder-molded sequentially. The obtained powder-molded product may be heat-treated such as firing as needed.

Examples of the powder-molding method include a method in which a solvent is added to a powder to form a slurry, and the slurry is applied to a collector, dried, and then pressurized (doctor blade method), a method in which a slurry is put in a liquid-absorbing mold, dried, and then pressurized (casting method), a method in which a powder is put in a mold of a predetermined shape and compression-molded (metallic molding method), an extrusion method in which a slurry is extruded from a die and molded, a centrifugal force method in which a powder is compressed and molded by a centrifugal force, a roll molding method in which a powder is fed to a roller press machine and roll-molded, cold isostatic pressing in which a powder is put in a flexible bag of a predetermined shape, the bag is put in a pressure medium, and an isotropic pressure is applied thereto, and hot isostatic pressing in which a powder is put in a container of a predetermined shape, a vacuum state is created, and an isotropic pressure is applied to the container at a high temperature by a pressure medium.

Examples of the metallic molding method include a single-action pressing method in which a powder is put in a fixed lower punch and a fixed die, and a pressure is applied to the powder by a movable upper punch, a double-action pressing method in which a powder is put in a fixed die, and a pressure is applied to the powder by a movable lower punch and a movable upper punch, a floating die method in which a powder is put in a fixed lower punch and a movable die, a pressure is applied to the powder by a movable upper punch, and when the pressure reaches higher than a predetermined value, the movable die is moved so that the fixed lower punch relatively enters inside the movable die, and a withdrawal method in which a powder is put in a fixed lower punch and a movable die, and a pressure is applied to the powder by a movable upper punch while simultaneously the movable die is moved so that the fixed lower punch relatively enters inside the movable die.

The thickness of the positive electrode layer is preferably 10 to 200 $\mu$m, more preferably 30 to 150 $\mu$m, and further preferably 50 to 100 um. The thickness of the solid electrolyte layer is preferably 50 nm to 1000 $\mu$m, and more preferably 100 nm to 100 um. The thickness of the negative electrode layer is preferably 10 to 200 $\mu$m, more preferably 30 to 150 $\mu$m, and further preferably 50 to 100 $\mu$m.

(Active materials)

Examples of an active material for the negative electrode include those containing at least one selected from the group consisting of a lithium alloy, a metal oxide, graphite, hard carbon, soft carbon, silicon, a silicon alloy, a silicon oxide $SiO_n$ ($0 < n \leq 2$), a silicon/carbon composite, a composite in which a silicon domain is enclosed in a pore of a porous carbon, lithium titanate, and graphite covered with lithium titanate. The silicon/carbon composite and the composite in which a silicon domain is enclosed in a pore of a porous carbon have a high specific capacity and are capable of increasing the energy density and the battery capacity, which is preferable. More preferable is a composite in which a silicon domain is enclosed in a pore of a porous carbon, which has excellent volume expansion relaxation associated with the lithium occlusion/release of silicon and is capable of maintaining a good balance among the macro conductivity, the micro conductivity, and the ion conductivity in a composite electrode material or an electrode layer. Particularly preferable is a composite in which a silicon domain is enclosed in a pore of a porous carbon, wherein the silicon domain is amorphous, the size of the silicon domain is 10 nm or less, and pores derived from a porous carbon are present near the silicon domain.

Examples of an active material for the positive electrode include those containing at least one selected from the group consisting of LiCo oxide, LiNiCo oxide, LiNiCoMn oxide, LiNiMn oxide, LiMn oxide, LiMn-based spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, lithium metal phosphate, a transition metal oxide, titanium sulfide, graphite, hard carbon, transition metal-containing lithium nitride, silicon oxide, lithium silicate, lithium metal, a lithium alloy, a Li-containing solid solution, and a lithium storable intermetallic compound. LiNiCoMn oxide, LiNiCo oxide, or LiCo oxide is preferable, and LiNiCoMn oxide is more preferable. LiNiCoMn oxide has a good affinity to a solid electrolyte and a good balance among the macro conductivity, the micro conductivity, and the ion conductivity. Additionally, LiNiCoMn oxide has a high average potential and is capable of increasing the energy density or the battery capacity in the balance between the specific capacity and the stability. In addition, the active material for the positive electrode may also have the surface covered with, for example, the present solid electrolyte, lithium niobate, lithium phosphate, or a lithium borate.

The active material in one embodiment of the present invention is preferably particulate. The 50% diameter in the volume-based particle size distribution thereof is preferably 0.1 um or more and 30 um or less, more preferably 0.3 um or more and 20 um or less, further preferably 0.4 um or more and 10 um or less, and most preferably 0.5 um or more and 3 um or less. Additionally, a ratio of a length of the major axis to a length of the minor axis (length of major axis/length of minor axis), that is, the aspect ratio, is preferably less than 3, and more preferably less than 2.

The active material in one embodiment of the present invention may form secondary particles. In such an instance, the 50% diameter in the number-based particle size distribution of the primary particles is preferably 0.1 um or more and 20 um or less, more preferably 0.3 um or more and 15 um or less, further preferably 0.4 um or more and 10 um or less, and most preferably 0.5 um or more and 2 um or less. When an electrode layer is formed by compression molding, the active material is preferably the primary particle. When the active material is the primary particle, the electron conduction path or the hole conduction path is less likely to be impaired even when compression-molded.

Examples

Hereinafter, the present invention will be specifically described based on Examples. The present invention is not limited only to these Examples. The powder X-ray diffraction measurement and the ion conductivity evaluation in the Examples and Comparative Examples were carried out by the following methods and procedures.

Example 1:

(1) Preparation of lithium ion conductive solid electrolyte

First, titanium dioxide ($TiO_2$) (anatase form, manufactured by FUJIFILM Wako Pure Chemical Corporation, purity: 98.5% or more) and niobium pentoxide ($Nb_2O_5$) (manufactured by FUJIFILM Wako Pure Chemical Corporation, purity: 99.9%) were weighed so that the percentage of the number of the atoms of niobium relative to the total number of the atoms of the elements of titanium and niobium was 8%, and lithium carbonate ($Li_2O_3$) (manufactured by Sigma-Aldrich, purity: 99.0% or more) was weighed so that the number of the atoms of lithium relative to the total number of the atoms of the elements of titanium and niobium was 1.92 times.

Each of the weighed powders was mixed for 3 hours using a zirconia ball mill (zirconia ball: diameter 1 mm) with the addition of a suitable amount of toluene.

The obtained mixture was put in an alumina boat and fired for 5 hours at 700°C while the temperature was increased to 700°C at a rate of temperature increase of 10°C/min under an air atmosphere (gas flow rate 100 mL/min) using a rotary firing furnace (manufactured by Motoyama).

A suitable amount of toluene was added to the primary fired product obtained by firing and pulverized for 3 hours using a zirconia ball mill (zirconia ball: diameter 1 mm).

The obtained pulverized product was put in the alumina boat and fired for 3 hours at 900°C while the temperature was increased to 900°C at a rate of temperature increase of 10°C/min under an air atmosphere (gas flow rate 100 mL/min) using the rotary firing furnace (manufactured by Motoyama).

The obtained secondary fired product was cooled, taken out at room temperature, and moved to a desiccator in which vacuum of 200 Pa or less was maintained to obtain a lithium ion conductive solid electrolyte (1).

(2) Powder X-ray diffraction (XRD) measurement

The powder X-ray diffraction measurement of the lithium ion conductive solid electrolyte (1) was carried out using a powder X-ray diffractometer PANalytical MPD (manufactured by Spectris Co., Ltd.). The measurement was carried out under the X-ray diffraction measurement conditions of using Cu-K$\alpha$ ray (output 45 kV, 40 mA) in a range of a diffraction angle 2θ = 10° to 60°, thereby obtaining an X-ray diffraction (XRD) pattern of the lithium ion conductive solid electrolyte (1). The obtained XRD pattern is shown in Figure 1. In the XRD pattern, only the monoclinic crystal structure was confirmed, which is the same as that of undoped $Li_2TiO_3$ of Comparative Example 2 described below.

(3) Ion conductivity evaluation

(Preparation of measurement pellets)

Measurement pellets for the ion conductivity evaluation of the lithium ion conductive solid electrolyte were prepared as follows. The obtained lithium ion conductive solid electrolyte (1) was pulverized in the pulverization procedure after primary firing described above, made into a powder, molded into a disc shape having a diameter of 10 mm and a thickness of 1 mm using a tableting machine and fired at 1000°C for 3 hours under the atmosphere. The obtained fired product had a relative density to the theoretical density of 93%. Gold layers were formed using a spattering machine on both surfaces of the obtained fired product, thereby obtaining measurement pellets for the ion conductivity evaluation.

(Impedance measurement)

The ion conductivity evaluation of the lithium ion conductive solid electrolyte (1) was carried out as follows. The measurement pellets prepared by the method described above were retained at 25°C for 2 hours before the measurement. Then, AC impedance measurement was carried out at 25°C using an impedance analyzer (manufactured by Solartron Analytical, Model No: 1260A) in a frequency range of 1 Hz to 10 MHz at an amplitude of 25 mV. The obtained impedance spectrum was fit to an equivalent circuit using equivalent circuit analysis software ZView attached to the equipment, thereby obtaining the total ion conductivity. The obtained ion conductivity is shown together in Table 1.

Comparative Example 1:

(Preparation of lithium ion conductive solid electrolyte)

A lithium ion conductive solid electrolyte (2) was obtained in the same manner as in Example 1 except that titanium dioxide and niobium pentoxide were weighed so that the percentage of the number of the atoms of niobium relative to the total number of the atoms of the elements of titanium and niobium was 16%, and lithium carbonate was weighed so that the number of the atoms of lithium relative to the total number of the atoms of the elements of titanium and niobium was 1.84 times.

(XRD Measurement, ion conductivity evaluation)

Regarding the XRD measurement and the ion conductivity evaluation, measurement and evaluation were carried out in the same manner as Example 1. The XRD pattern of the lithium ion conductive solid electrolyte (2) is shown together in Figure 1. In the XRD pattern of the lithium ion conductive solid electrolyte (2), in addition to diffraction peaks derived from the monoclinic crystal structure that was identified as $Li_2TiO_3$ (ICSD reference code: 15150) indicated by ▼ (inverted black triangle), diffraction peaks derived from the trigonal crystal structure of lithium niobate ($LiNbO_3$) (ICSD reference code: 74469) in hatched regions were confirmed. In more detail, in the diffraction pattern of the lithium ion conductive solid electrolyte (2) of Comparative Example 1, peaks specific to $LiNbO_3$ were observed at near 33° and 54°; however, in the diffraction pattern of the lithium ion conductive solid electrolyte (1) of Example 1, these peaks were not observed. Therefore, it can be confirmed that the lithium ion conductive solid electrolyte (1) of Example 1 has only the monoclinic crystal structure that is identified as $Li_2TiO_3$.

The total ion conductivity evaluation of the lithium ion conductive solid electrolyte (2) is shown together in Figure 1.

Comparative Example 2:

(Preparation of lithium ion conductive solid electrolyte)

A lithium ion conductive solid electrolyte (3) was obtained in the same manner as in Example 1 except that niobium pentoxide was not used and titanium dioxide and lithium carbonate were weighed so that the number of the atoms of lithium relative to the number of the atoms of titanium in titanium dioxide was 2.00 times.

(XRD Measurement, ion conductivity evaluation)

Regarding the XRD measurement and the ion conductivity evaluation, measurement and evaluation were carried out in the same manner as Example 1. The obtained XRD pattern is shown together in Figure 1. In the XRD pattern of the lithium ion conductive solid electrolyte (3), only the monoclinic crystal structure identified as $Li_2TiO_3$ was confirmed.

The ion conductivity evaluation of the lithium ion conductive solid electrolyte (3) was too low and could not be measured.

[Table 1]

| | Compositional formula | Confirmed crystal structure | Total ion conductivity (S/cm) |
|---|---|---|---|
| Example 1 | $Li_{1\ 92}Ti_{0.92}Nb_{0.08}O_3$ | $Li_2TiO_3$ | $2\times10^{-6}$ |
| Comparative Example 1 | $Li_{1.84}Ti_{0.84}Nb_{0.16}O_3$ | $Li_2TiO_3$, $LiNbO_3$ | $6\times10^{-7}$ |
| Comparative Example 2 | $Li_{2.00}TiO_3$ | $Li_2TiO_3$ | Not measurable |

Examples 2 and 3 and Comparative Examples 3 to 5:

(Theoretical calculation)

The present electrolyte is an electrolyte obtained by substituting some of titanium elements with doped M1 elements in a lithium-containing titanium oxide represented by a compositional formula $Li_2TiO_3$. In addition, as described above, the M1 is doped, substituting for the titanium element to occupy the position of the titanium element, and is in a state of being solid-soluted in the lithium-containing titanium oxide, and the monoclinic crystal structure of $Li_2TiO_3$, which becomes the basis, is maintained. Here, searching for the M1 element capable of substituting the titanium position and being solid-soluted in $Li_2TiO_3$ was carried out using theoretical calculation.

Specifically, a structure in which a Ti atom in a supercell of $Li_2TiO_3$ was substituted with the M1 atom was prepared, and the most stable structure was obtained using the first-principles calculation and compared.

The details of the first-principles calculation were carried out as follows. One Ti atom in a supercell ($Li_{32}Ti_{16}O_{48}$) composed of 16 unit cells was substituted with one M1 atom, in a case where the M1 atom was Nb, Ta, or V, one Li atom was removed from the structure in consideration of the electrical neutrality conditions, and supercells of all atomic arrangements with different geometric symmetry were prepared. In these structures, the amount of the M1 element doped corresponds to 6%. The atomic arrangements of the supercells described above were input into first-principles calculation package software Vienna Ab initio Simulation Package (VASP) (handled by HPC systems Inc.), structural optimization was carried out with the composition of each example shown in Table 2 by changing the M1 to Nb, Ta, V, Sn or Si, and the calculation of energy was carried out.

The structural optimization by the first-principles calculation was carried out under the following conditions.

· Pseudopotential: Projector Augmented Wave (PAW) method
· Exchange-correlation functional: Generalized Gradient Approximation (GGA)
· Energy cut-off: 520 eV
· k point mesh: $2 \times 2 \times 2$

Increments (meV/atom) of the energy per atom from the convex hull of $Li_2TiO_3$ partially substituted with the M1 element were calculated using the energy values of all of the unary, binary, ternary and quaternary compositions that were constituted of Li, Ti, M1 and O recorded in Materials Project database (website "https://materialsproject.org/", visited in August, 2021) provided by Kristin Persson, et al. The calculated values are shown in Table 2. Regarding the difference in geometric symmetry, the atomic arrangement with geometric symmetry in which the value of the calculated energy was the lowest was employed. It is considered that, as the increment of the energy from the convex hull becomes smaller, $Li_2TiO_3$ partially substituted with the M1 element becomes more stable.

[Table 2]

|  | Compositional formula | Energy difference from convex hull per atom (meV/atom) |
|---|---|---|
| Example 2 | $Li_{1.94}Ti_{0.94}Nb_{0.06}O_3$ | 8.7 |
| Example 3 | $Li_{1.94}Ti_{0.94}Ta_{0.06}O_3$ | 8.4 |
| Comparative Example 3 | $Li_{1.94}Ti_{0.94}V_{0.06}O_3$ | 15.7 |
| Comparative Example 4 | $Li_{2.00}Ti_{0.94}Sn_{0.06}O_3$ | 10.3 |
| Comparative Example 5 | $Li_{2.00}Ti_{0.94}Si_{0.06}O_3$ | 12.8 |

From the calculation results shown in Table 2, it can be confirmed that when Nb and Ta described in Examples 2 and 3 were used as the M1, $Li_2TiO_3$ that was 6% substituted with the M1 element was stable, compared with V, Sn, and Si described in Comparative Examples 3 to 5.

Comparative Examples 6 and 7:

(Preparation of lithium ion conductive solid electrolyte)

A lithium ion conductive solid electrolyte (4) of Comparative Example 6 and a lithium ion conductive solid electrolyte (5) of Comparative Example 7 were each obtained in the same manner as in Example 1 except that tin (IV) oxide (manufactured by Sigma-Aldrich, purity: 99.0% or more) or silicon oxide (manufactured by Sigma-Aldrich, purity: 99.0% or more) was used instead of niobium pentoxide.

(XRD Measurement)

XRD measurement was carried out in the same manner as the measurement in Example 1. In the XRD measurement, the confirmed crystal structures are shown in Table 3 together with the result of Example 1 described above (ICSD reference code, $Li_2SnO_3$: 21032, $Li_2SiO_3$: 100402).

[Table 3]

|  | Compositional formula | Confirmed crystal structure |
|---|---|---|
| Example 1 | $Li_{1.92}Ti_{0.92}Nb_{0.08}O_3$ | $Li_2TiO_3$ |
| Comparative Example 6 | $Li_{2.00}Ti_{0.92}Sn_{0.08}O_3$ | $Li_2TiO_3$, $Li_2SnO_3$ |
| Comparative Example 7 | $Li_{2.00}Ti_{0.92}Si_{0.08}O_3$ | $Li_2TiO_3$, $Li_2SiO_3$ |

From the results shown in Table 3, it can be confirmed that, in the lithium ion conductive solid electrolytes (4) and (5) of Comparative Examples 6 and 7, the M1 atom was not stably solid-soluted and a crystal structure other than $Li_2TiO_3$ was generated in the lithium ion conductive solid electrolytes actually prepared. The theoretical calculation described above is affirmed by this experiment result.

From the results of the Examples, it can be confirmed that a lithium ion conductive solid electrolyte that is a compound represented by a compositional formula $Li_{2-x}Ti_{1-x}M1_xO_3$, wherein the M1 is at least one metallic element selected from the group consisting of elements of niobium and tantalum, and $0.05 \leq x \leq 0.15$, has a high ion conductivity.

Industrial Applicability

The lithium ion conductive solid electrolyte of the present invention is an oxide-based lithium ion conductive solid electrolyte having a high ion conductivity, and can be preferably used as a solid electrolyte for a lithium-ion secondary battery.

**Claims**

1.   A lithium ion conductive solid electrolyte that is a compound represented by a compositional formula $Li_{2-x}Ti_{1-x}M1_xO_3$, wherein the M1 is at least one metallic element selected from the group consisting of elements of niobium and tantalum, and

$$0.05 \leq x \leq 0.15.$$

2.   The lithium ion conductive solid electrolyte according to claim 1, wherein a monoclinic crystal structure is confirmed in X-ray diffraction measurement.

3.   The lithium ion conductive solid electrolyte according to claim 1 or 2, wherein a total lithium ion conductivity $\delta_{total}$ (25°C) is $1.0 \times 10^{-6}$ (S/cm) or more.

4.   A lithium-ion secondary battery, comprising the lithium ion conductive solid electrolyte according to any one of claims 1 to 3 as a solid electrolyte.

[Fig. 1]

## INTERNATIONAL SEARCH REPORT

| International application No. |
| --- |
| **PCT/JP2023/003939** |

**A. CLASSIFICATION OF SUBJECT MATTER**

*H01B 1/08*(2006.01)i; *H01B 1/06*(2006.01)i; *H01M 10/052*(2010.01)i; *H01M 10/0562*(2010.01)i
FI: H01B1/08; H01M10/0562; H01M10/052; H01B1/06 A

According to International Patent Classification (IPC) or to both national classification and IPC

**B. FIELDS SEARCHED**

Minimum documentation searched (classification system followed by classification symbols)

H01B1/08; H01B1/06; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-91079 A (KABUSHIKI KAISHA TOSHIBA) 17 April 2008 (2008-04-17) claim 1 | 1-4 |
| A | EP 3863094 A2 (SAMSUNG ELECTRONICS CO., LTD.) 11 August 2021 (2021-08-11) paragraph [0168] | 1-4 |
| A | JP 2015-46218 A (PANASONIC CORP.) 12 March 2015 (2015-03-12) paragraph [0077] | 1-4 |
| A | JP 2012-33279 A (NEC ENERGY DEVICES, LTD.) 16 February 2012 (2012-02-16) paragraph [0094] | 1-4 |
| A | JP 2018-49701 A (KABUSHIKI KAISHA TOSHIBA) 29 March 2018 (2018-03-29) paragraph [0065] | 1-4 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 March 2023** | **18 April 2023** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2" align="center">International application No.<br>**PCT/JP2023/003939**</td></tr>
</table>

| Patent document<br>cited in search report | Publication date<br>(day/month/year) | Patent family member(s) | Publication date<br>(day/month/year) |
|---|---|---|---|
| JP 2008-91079 A | 17 April 2008 | US 2008/0078594 A1<br>claim 1<br>US 2012/0135294 A1<br>CN 101154729 A<br>KR 10-2008-0029878 A | |
| EP 3863094 A2 | 11 August 2021 | US 2021/0257628 A1<br>KR 10-2021-0099433 A<br>CN 113285076 A | |
| JP 2015-46218 A | 12 March 2015 | WO 2013/099279 A1 | |
| JP 2012-33279 A | 16 February 2012 | US 2013/0122373 A1<br>paragraph [0112]<br>WO 2012/014793 A1<br>EP 2600458 A1<br>CN 103004005 A | |
| JP 2018-49701 A | 29 March 2018 | US 2018/0083314 A1<br>paragraph [0076]<br>EP 3296259 A1<br>EP 3604219 A1<br>CN 107845830 A<br>KR 10-2018-0031548 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021150286 A

- JP 2013026003 A